# EUROPEAN PATENT SPECIFICATION

(11) **EP 4 346 108 B1**
(45) Date of publication and mention of the grant of the patent: **15.04.2026**
(21) Application number: 23168149.5
(22) Date of filing: 16.04.2023
(51) Int. Cl.: H04B 1/69, H04L 5/00

(54) **METHOD AND APPARATUS FOR TRANSMITTING AN UPLINK SIGNAL BASED ON DOPPLER FREQUENCY VARIATION**
VERFAHREN UND VORRICHTUNG ZUR ÜBERTRAGUNG EINES UPLINK-SIGNALS AUF BASIS VON DOPPLERFREQUENZVARIATION
PROCÉDÉ ET APPAREIL DE TRANSMISSION D'UN SIGNAL DE LIAISON MONTANTE SUR LA BASE D'UNE VARIATION DE FRÉQUENCE DOPPLER

(30) Priority: 29.09.2022 KR 20220124467
(43) Date of publication of application: 03.04.2024
(73) Proprietor: Electronics and Telecommunications Research Institute, Daejeon 34129 (KR)
(72) Inventor: IM, GYEONGRAE, 34129 Daejeon (KR); KANG, JINHO, 34129 Daejeon (KR); KIM, PANSOO, 34129 Daejeon (KR); RYU, JOON GYU, 34129 Daejeon (KR); JUNG, DONG HYUN, 34129 Daejeon (KR); JUNG, SOO YEOB, 34129 Daejeon (KR)
(74) Representative: Betten & Resch

(56) References cited:
- EP-A2- 1 881 625
- US-A1- 2010 098 245
- GIUGNO L ET AL: "Optimal Pilot Symbol Distribution for Efficient and Low-Complexity Doppler-Shift and Doppler-Rate Estimation in Bursty Transmission", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 5993 - 5998, XP031126626, ISBN: 978-1-4244-0353-0
- PENG HAN ET AL: "Adaptive pilot design based on Doppler frequency shift estimation for OFDM system", COMPUTER DESIGN AND APPLICATIONS (ICCDA), 2010 INTERNATIONAL CONFERENCE ON, vol. 3, 1 January 2010 (2010-01-01), pages V4 - 533, XP055154305, ISBN: 978-1-42-447164-5, DOI: 10.1109/ICCDA.2010.5540707

## Description

### TECHNICAL FIELD

The present disclosure relates to an apparatus and a method for transmitting an uplink signal based on a Doppler frequency change.

### BACKGROUND

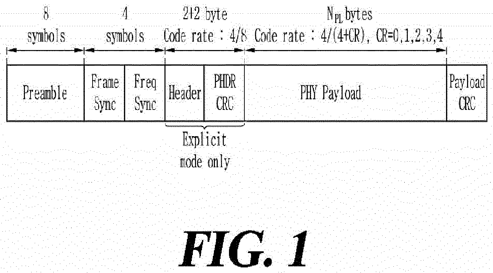

IoT technology in the terrestrial network includes LoRa, Ingenu, NB-IoT, etc. IoT technology for high-speed mobile bodies is being studied based on IoT technology that is being serviced on the terrestrial network. The frame structure of the existing LoRa system is shown in FIG. 1.

The symbols of the frames of the LoRa system serviced through the terrestrial network are used for preamble (8 symbols), frame and frequency synchronizations (4.25 (2+2.25) symbols), header and cyclic redundancy check (CRC) for the header (4 bytes (4/8 Hamming code is used)), payload (NPL bytes), and CRC for the payload. A chirp spread spectrum modulation scheme is used for modulation of the preamble, synchronization, and payload symbol, and an extended Hamming code is used as an error correction code.

The symbol modulation scheme of the LoRa is the chirp spread spectrum modulation scheme, and when a spreading factor, SF, is applied to the modulation scheme, one symbol includes 2SF number of continuous chips. The baseband frequency of the symbol continuously increases over time.

When the LoRa system is used for IoT communication of high-speed mobile bodies, that is, when the high-speed mobile body transmits a signal to an IoT terminal or the IoT terminal transmits a signal to the high-speed mobile body, reception performance may be significantly reduced due to a Doppler effect generated due to a large relative speed between the high-speed mobile body and the IoT terminal.

US 2010/098245 A1 describes a spread scrambled multiple access (SSCMA) scheme. A first encoded bit stream of a first terminal is scrambled according to a first scrambling signature. A second encoded bit stream of a second terminal is scrambled according to a second scrambling signature. The first scrambled bit stream is spread to match a communication channel bandwidth. The second scrambled bit stream is spread to match the communication channel bandwidth.

Giugno L et al: "Optimal Pilot Symbol Distribution for Efficient and Low Complexity Doppler-Shift and Doppler-Rate Estimation in Bursty Transmission", Proceedings of the 2007 IEEE International Conference on Communications (ICC 2007), 24-28 JUNE 2007, Glasgow, UK, IEEE, Piscataway, NJ, USA, 1 June 2007 (2007-06-01), pages 5993-5998, XP031126626, ISBN: 978-1-4244-0353-0, deals with the problem of optimizing the burst format of packet transmission to perform joint estimation of carrier Doppler-shift and Doppler-rate. Obtaining of pilot symbol distributions that minimize the Doppler-shift and the Doppler-rate Cramér-Rao bounds (CRBs) for the joint estimation of carrier phase/Doppler-shift and of Doppler-rate are aimed. Further, a new Data Aided (DA) estimation algorithm suitable for each distribution is first derived and then evaluated by analysis and by simulation.

EP 1 881 625 A2 discloses a method and a system for satellite communication. Aspects of one method include a receiver that handles digital video broadcasting. The receiver is enabled to dynamically vary spacing between one or more pilots within at least one frame based on a determined symbol rate. The size of each of a plurality of received programs is determined and the spacing between one or more pilots is dynamically varied based on the determined size of each of the plurality of received programs.

According to Peng Han et al: "Adaptive pilot design based on Doppler frequency shift estimation for OFDM system", Computer Design and Applications (ICCDA), 2010 International Conference on, vol. 3, 1 January 2010 (2010-01-01), pages V4-533, XP055154305, DOI: 10.1109/ICCDA.2010.5540707 ISBN: 978-1-42-447164-5, in the Orthogonal Frequency Division Multiplexing (OFDM) system, pilot signals are transmitted for the receiving device to estimate the channel's response. The interval of such pilot is often designed to accommodate the devices under most extreme channel conditions or the average conditions of the environment. This scenario design either results in unnecessary overhead that could have been used for data transmission otherwise, or causes the significant degradation of the system performance when the environment worsens. Peng Han et al, therefore, proposes an adaptive pilot system that sends pilot signals adaptively based on the Doppler frequency shift estimation. It reacts to the environment conditions. Furthermore, Peng Han et al addresses placement of signals in channel and the flowcharts on both TDD and FDD systems to facilitate the adaptive operation.

### SUMMARY

Objects of the present invention are achieved by subject matters of the independent claims. Dependent claims define some of possible exemplary embodiments.

One embodiment of the present disclosure provides an apparatus for transmitting a signal based on a Doppler frequency change.

Another embodiment of the present disclosure provides a method of transmitting a signal based on a Doppler frequency change.

According to an embodiment, an apparatus for transmitting an uplink signal to a base station is provided. The apparatus includes a processor, a memory, and a communication unit, where the processor executes a program stored in the memory to perform the steps of: calculating a maximum change rate of a Doppler frequency; arranging a pilot signal in the uplink signal based on a spreading factor of the uplink signal and the maximum change rate of the Doppler frequency; and transmitting the uplink signal in which the pilot signal is arranged to the base station.

In the apparatus, when performing the step of arranging the pilot signal in the uplink signal based on the spreading factor of the uplink signal and the maximum change rate of the Doppler frequency, the processor performs a step of arranging the pilot signal between symbols of a payload of the uplink signal.

In the apparatus, when performing the step of arranging the pilot signal between the symbols of the payload of the uplink signal, the processor may perform a step of periodically arranging the pilot signal between the symbols of the payload.

In the apparatus, when performing the step of periodically arranging the pilot signal between the symbols of the payload, the processor may perform a step of inserting information indicating that the pilot signal is present in the payload and information on a period of the pilot signal into a header of the uplink signal.

In the apparatus, when performing the step of arranging the pilot signal in the uplink signal based on the spreading factor of the uplink signal and the maximum change rate of the Doppler frequency, the processor may perform the steps of: determining a frequency bandwidth of a chip based on a bandwidth of the uplink signal and the spreading factor; and determining the number of the pilot signals based on the maximum change rate of the Doppler frequency and the frequency bandwidth of the chip.

In the apparatus, when performing the step of arranging the pilot signal in the uplink signal based on the spreading factor of the uplink signal and the maximum change rate of the Doppler frequency, the processor may perform the steps of: determining a frequency bandwidth of a chip based on a bandwidth of the uplink signal and the spreading factor; and determining a period of the pilot signal based on the maximum change rate of the Doppler frequency and the frequency bandwidth of the chip.

In the apparatus, prior to the step of calculating the maximum change rate of the Doppler frequency, the processor may further perform a step of determining a window of time in which the change rate of the Doppler frequency is maximum in consideration of a movement time and a movement speed of the base station.

In the apparatus, the processor executes the program to perform the step of calculating the maximum change rate of the Doppler frequency when the window of time time in which the change rate of the Doppler frequency is maximum is included in a time period during which a terminal is exposed to the base station to transmit the uplink signal.

According to another embodiment, method of transmitting an uplink signal to a base station is provided. The method includes calculating a maximum change rate of a Doppler frequency, arranging a pilot signal in the uplink signal based on a spreading factor of the uplink signal and the maximum change rate of the Doppler frequency, and transmitting the uplink signal in which the pilot signal is arranged to the base station.

In the method, the arranging of the pilot signal in the uplink signal based on the spreading factor of the uplink signal and the maximum change rate of the Doppler frequency includes arranging the pilot signal between symbols of a payload of the uplink signal.

In the method, the arranging of the pilot signal between the symbols of the payload of the uplink signal may include periodically arranging the pilot signal between the symbols of the payload.

In the method, the periodically arranging of the pilot signal between the symbols of the payload may include inserting information indicating that the pilot signal is present in the payload and information on a period of the pilot signal into a header of the uplink signal.

In the method, the arranging of the pilot signal in the uplink signal based on the spreading factor of the uplink signal and the maximum change rate of the Doppler frequency may include determining a frequency bandwidth of a chip based on a bandwidth of the uplink signal and the spreading factor, and determining the number of the pilot signals based on the maximum change rate of the Doppler frequency and the frequency bandwidth of the chip.

In the method, the arranging of the pilot signal in the uplink signal based on the spreading factor of the uplink signal and the maximum change rate of the Doppler frequency may include determining a frequency bandwidth of a chip based on a bandwidth of the uplink signal and the spreading factor, and determining a period of the pilot signal based on the maximum change rate of the Doppler frequency and the frequency bandwidth of the chip.

The method may further include determining a window of time in which a change rate of the Doppler frequency is maximum in consideration of a movement time and a movement speed of the base station prior to calculating the maximum change rate of the Doppler frequency.

In the method, the maximum change rate of the Doppler frequency may be calculated when the window of time in which the change rate of the Doppler frequency is maximum is included in a time period during which a terminal is exposed to the base station to transmit the uplink signal.

In a situation in which change in a carrier signal frequency due to the Doppler frequency and Doppler frequency change, in the waveform for conventional IoT, through transmission of a pilot signal it is possible to increase the reliability of an IoT environment having high-speed mobility, such as a satellite. That is, the reliability may be secured by increasing probability of packet detection in satellite IoT and reducing packet error probability.

### BRIEF DESCRIPTION OF THE DRAWINGS

FIG. 1 is a diagram illustrating a frame structure of a LoRa communication system.
FIG. 2 is a graph illustrating a normalized amount of shift of a Doppler frequency according to one embodiment of the present disclosure.
FIG. 3 is a diagram illustrating a frame structure of a wireless communication system according to one embodiment of the present disclosure.
FIG. 4 is a block diagram illustrating a transmission apparatus according to one embodiment of the present disclosure.

### DETAILED DESCRIPTION

Hereinafter, the embodiments of the present disclosure are described in detail for those having ordinary skill in the art to easily practice, with reference to the accompanying drawings. The present disclosure, however, may be embodied in various forms, and should not be construed as being limited only to the illustrated embodiments. In the drawings, elements irrelevant to the present disclosure are omitted for the simplicity of explanation, and like reference numerals denote like elements throughout the entire specification.

Throughout the present specification, the terminal may refer to a user equipment (UE), a mobile station (MS), a mobile terminal (MT), an advanced mobile station (AMS), a high reliability mobile station (HR-MS), a subscriber station (SS), a portable subscriber station (PSS), an access terminal (AT), a machine type communication device (MTC device), etc. and may also include all or some of the functionalities of UE, MS, MT, AMS, HR-MS, SS, PSS, AT, or the like.

In addition, a base station (BS) may refer to a node B, an evolved node B (eNB), a gNB, an advanced base station (ABS), a high reliability base station (HR-BS), an access point (AP), a radio access station (RAS), a base transceiver station (BTS), a mobile multihop relay (MMR)-BS, a relay station (RS) that performs a role of a base station, a relay node (RN) that performs a role of a base station, an advanced relay station (ARS) that performs a role of a base station, a high reliability relay station (HR-RS) that performs a role of a base station, a small base station (a femto BS, a home node B (HNB), a home eNodeB (HeNB), a pico BS, a macro BS, a micro BS, etc.), and the like, and may also include all or some of the functionalities of NB, eNB, gNB, ABS, AP, RAS, BTS, MMR-BS, RS, RN, ARS, HR-RS, small base station, and the like.

Throughout the present specification, when a part "includes or comprises" a component, this means that the part may further include other components, rather than excluding other components, unless specifically stated otherwise.

In the present specification, a singular expression may be interpreted as single or plural unless an explicit expression such as "one" or "single" is used.

As used herein, "and/or" indicates each of the stated components and all combinations of one or more of the stated components.

In the present specification, terms including ordinal numbers such as first, second, etc. may be used to describe various components, but the components are not limited by the terms. The terms are used only for the purpose of distinguishing one component from another component. For example, a first element may be termed a second element and vice versa, without departing from the scope of the present disclosure.

In the flowchart described with reference to the drawings in the present specification, the order of operations may be changed, several operations may be merged, a certain operation may be divided, and a specific operation may not be performed.

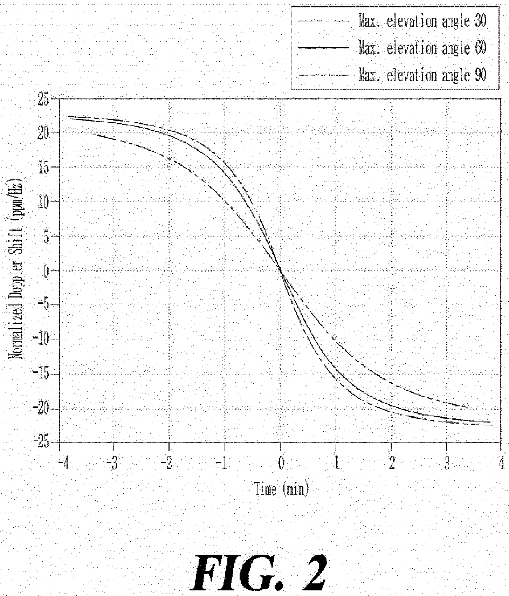

FIG. 2 is a graph illustrating a normalized shift amount of a Doppler frequency according to one embodiment.

A low earth orbit (LEO) satellite with an altitude of 600 km may cause a frequency offset of up to 23 ppm, and the frequency offset may cause a Doppler frequency offset of 23 kHz when the LEO satellite uses a carrier frequency in 1 GHz band. Since the satellite at the altitude of 600 km moves at about 28,000 km/h, the magnitude of the Doppler frequency offset may vary according to the position of the satellite. Such a change in the Doppler frequency is illustrated in FIG. 2.

Referring to FIG. 2, a Doppler frequency change rate may be calculated through a normalized Doppler shift. For example, since the Doppler frequency change rate is approximately 200 Hz/s maximum when the satellite at the altitude of 600 km uses a carrier frequency in the 1 GHz band, when the length of a communication packet is increased, a Doppler frequency offset estimated by a preamble at the front side of a frame may be changed at the rear side of the frame due to the Doppler frequency change rate. That is, a difference occurs between frequency offsets of a front side of a packet and a rear side of a packet, and when a frequency of the rear side of the packet is compensated for by using a result estimated in the preamble, a packet error occurs.

For example, performance degradation due to Doppler frequency offset and Doppler frequency change rate may be more serious in the LoRa packet. In order for a packet modulated in the LoRa system to achieve a positive link budget in a satellite channel, a high spreading factor needs to be used because the high spreading factor greatly increases a length of the packet.

For example, when a LoRa packet having a bandwidth of 125 kHz and a payload of 100 bits is encoded with a 1/2 Hamming code and is modulated with SF12, a time length of one packet is about 0.98 seconds, and thus, referring to FIG. 2, a difference between a frequency offset estimated by a preamble and a frequency offset at the end of the packet may be about 200 Hz.

In the case of a LoRa packet having a bandwidth of 125 kHz, since the frequency bandwidth of one chip is 125,000/212 (≈ 30.5) Hz, a difference of up to 7 chips may occur when the frequency offset difference between both sides of one packet is 200 Hz. Since an error occurs when a difference of half a chip or more occurs when demodulating and decoding a symbol, it is necessary to reduce the frequency difference of 7 chips to a difference of half a chip or less.

Unlike the ground where a negligible Doppler frequency offset occurs, in a low earth orbit satellite channel, a terminal needs to periodically measure a frequency offset and check a frequency change due to a Doppler frequency change rate. An IoT terminal having a good calculation capability may estimate a Doppler frequency change based on the received LoRa preamble to predict a Doppler frequency change rate and use the prediction result for frequency correction.

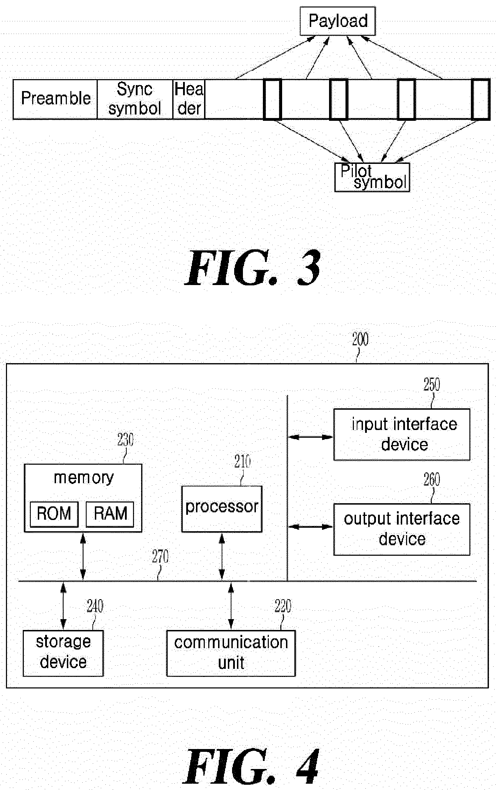

FIG. 3 is a diagram illustrating a frame structure of a wireless communication system according to one embodiment.

In the present disclosure, in order to directly transmit a signal to a base station (e.g., LEO satellite) having very high mobility, the terminal predicts a Doppler frequency offset and a Doppler frequency change rate and uses the prediction result in frequency correction, thereby achieving higher reliability than the conventional case. For example, two terminals may increase a packet detection probability in a one-to-one communication system in which they directly communicate with each other through a base station having very high mobility based on a packet structure robust to the Doppler effect.

In the packet of the conventional IoT system, since the packet is detected through the preamble and the frequency is corrected through the synchronization symbol, when the Doppler frequency change occurs in the payload, the frequency error cannot be corrected and an error floor may occur.

A transmission apparatus according to one embodiment can periodically/aperiodically transmit a pilot symbol in the middle of the payload, and a reception apparatus can reduce packet errors by tracking the pilot symbol inserted in the middle of the payload.

Referring to FIG. 3, in a frame structure according to one embodiment, pilot symbols are arranged according to a spreading factor. Here, one pilot symbol may be one reference chirp modulation symbol or a plurality of reference chirp modulation symbols. When one pilot symbol includes a plurality of reference chirp modulation symbols, the plurality of reference chirp modulation symbols may include the same information. The reception apparatus may correct the frequency offset of the payload appearing after the pilot symbol based on the pilot symbol inserted in the payload.

The transmission apparatus according to one embodiment transmits more pilot symbols in the middle of the payload as the spreading factor increases. When the spreading factor increases by one level, the length of one symbol increases twofold, and thus a larger number of pilot symbols may be transmitted in the middle of the payload that is modulated by the larger spreading factor. For example, if the number of pilot symbols periodically transmitted in the payload section is b when the spreading factor is a, the number of pilot symbols may be 2b when the spreading factor is a+1.

For example, when a signal is transmitted at a carrier frequency of 1 GHz in a bandwidth of 125 kHz, if a spreading factor of 11 is used, the frequency bandwidth of one chip is 61 Hz, the payload is 19 symbols, the length of one symbol is 16.4 ms, and the length of one frame is 508 ms. In this case, when the Doppler frequency change rate is 200 Hz/s, a difference of up to two chips may occur because a difference between frequency offsets at both sides of a frame is 100 Hz. Therefore, in order to reduce decoding errors, at least four pilots need to be arranged between 19 symbols of the payload. That is, it is required to arrange one pilot for every four to five symbols to estimate the changed Doppler frequency offset.

As another example, when the spreading factor of 12 is used, the frequency bandwidth of the chip is 31 Hz, the payload is 17 symbols, the length of one symbol is 33 ms (0.033 sec), and the length of one frame is 957 ms. When the Doppler frequency change rate is 200 Hz/s, the frequency error between both sides of the frame becomes 191.4 Hz, and thus a difference of up to 7 chips may occur. Therefore, when one pilot signal is transmitted every two to three symbols, the reception apparatus may receive the packet without an error even when the Doppler frequency change rate is the maximum.

That is, the Doppler frequency change rate of 200 Hz/s may generate an error of 6.6 Hz per one symbol (0.033 sec), and in this case, when the number of symbols is 2.35, the frequency error exceeds half (15.5 Hz) of the frequency bandwidth 31 Hz of the chip, and thus, when the maximum change of 200 Hz occurs, one pilot symbol needs to be transmitted every two symbols.

When a terminal according to one embodiment is capable of receiving a beacon signal of a satellite, the terminal may estimate an orbit of the satellite, a Doppler frequency offset, and a Doppler frequency change rate by using information received from the satellite. That is, when the terminal having all the information about the satellite transmits an uplink signal to the satellite, the terminal can accurately calculate the Doppler frequency offset and the Doppler frequency change rate, and thus the terminal can compensate for the Doppler frequency offset in advance and transmit the uplink signal without transmitting the pilot signal.

A terminal according to another embodiment may receive a beacon signal transmitted from a satellite, but may know only orbit and altitude information of the satellite. When the terminal knows the orbit and altitude information of the satellite, the terminal may calculate a Doppler frequency offset and a maximum value of a Doppler frequency change rate at a transmission timing of the terminal, and arranges a pilot signal between symbols of the payload based on the Doppler frequency offset and the maximum Doppler frequency change rate. For example, the terminal arranges and transmits a pilot signal between symbols of the payload before the accumulated value of the Doppler frequency change rate exceeds a half chip, and the satellite receiving the packet from the terminal may obtain correction information for frequency correction from the pilot signal. In this case, the terminal may insert information indicating that the pilot signal exists in the payload and information on the period of the pilot signal in the header and the like.

A terminal according to still another embodiment cannot perform bidirectional communication with a satellite and may transmit an uplink signal to the satellite. That is, when the terminal does not have the capability of receiving a signal transmitted from the satellite, the terminal needs to know a target packet error rate and the transmittable time. For example, a time for which a low earth orbit satellite at an altitude of 600 km can be connected to a terminal on the ground may be a maximum of 10 minutes. In order for the terminal to transmit an uplink signal during the time when the terminal is exposed to the satellite, the terminal may know in advance a section or a window of time time in which the Doppler frequency change rate is large based on the Doppler frequency shift amount of FIG. 2 in consideration of a movement time and a movement speed of the satellite. That is, insertion of the pilot signal into all packets assuming maximum Doppler frequency change rate even when connection between the terminal and the satellite is limited may be disadvantageous in terms of packet throughput. Accordingly, the terminal can insert a pilot signal between symbols of the payload when a window of time in which the Doppler frequency change rate is the maximum is included in a time period during which the terminal is exposed to the satellite to transmit an uplink signal in consideration of a Doppler frequency shift amount and a target packet error rate, and accordingly, significantly improved performance can be expected in terms of the packet error rate and the packet throughput.

FIG. 4 is a block diagram illustrating a transmission apparatus according to another embodiment.

The transmission apparatus according to another embodiment may be implemented as a computer system, for example, a computer-readable medium. Referring to FIG. 4, the computer system 200 may include at least one of a processor 210, a memory 230, an input interface device 250, an output interface device 260, and a storage device 240, which communicate with each other via a bus 270. The computer system 200 may also include a communication unit 220 linked to a network. The processor 210 may be a central processing unit, CPU, or a semiconductor device that executes instructions stored in the memory 230 or the storage device 240. The memory 230 and the storage device 240 may include various types of volatile or nonvolatile storage mediums. For example, the memory may include a read only memory (ROM) and a random access memory (RAM). In the embodiment of the present disclosure, the memory may be located inside or outside the processor, and the memory may be connected to the processor through various known means. The memory is various types of volatile or nonvolatile storage mediums, and for example, the memory may include the read-only memory (ROM) or the random access memory (RAM).

Accordingly, the embodiment of the present disclosure may be implemented as a method implemented in a computer or may be implemented as a non-transitory computer-readable medium in which computer-executable instructions are stored. In one embodiment, when executed by the processor, the computer-readable instructions may perform the method according to at least one aspect of the present disclosure.

The communication unit 220 may transmit or receive a wired signal or a wireless signal.

Meanwhile, the embodiments of the present disclosure are not implemented only through the apparatuses and/or methods described so far, but may also be implemented through a program for implementing a function corresponding to the configuration of the embodiments of the present disclosure or a recording medium having the program recorded thereon, and such an implementation can be easily implemented by those having ordinary skill in the art from the description of the embodiments described above. Specifically, the method (e.g., a network management method, a data transmission method, a transmission schedule generation method, etc.) according to the embodiments of the present disclosure may be implemented in the form of program instructions that can be executed through various computer means, and may be recorded in a computer-readable medium. The computer-readable medium may include a program instruction, a data file, a data structure, and the like, alone or in combination. The program instruction recorded in the computer-readable medium may be specially designed and configured for the embodiment of the present disclosure, or may be known to and usable by those having ordinariy skill in the art of computer software. The computer-readable recording medium may include a hardware device configured to store and execute the program instruction. For example, the computer-readable recording medium may be a magnetic medium such as a hard disk, a floppy disk and a magnetic tape, an optical medium such as a CD-ROM and a DVD, a magneto-optical medium such as a floptical disk, a ROM, a RAM, a flash memory, or the like. The program instruction may include not only machine codes such as those made by a compiler, but also high-level language codes that can be executed by a computer through an interpreter.

Although the embodiments of the present disclosure have been described above in detail, the scope of the present disclosure is not limited thereto, and various modifications and improvements made by those skilled in the art using the basic concept of the present disclosure defined in the following claims also belong to the scope of the present disclosure.

## Claims

1. An apparatus for transmitting an uplink signal to a base station, the apparatus comprising:
a processor (210); a memory (230); and a communication unit (220),
wherein the processor (210) executes a program stored in the memory (230) to perform the steps of:
calculating a maximum change rate of a Doppler frequency;
arranging a pilot signal in the uplink signal based on a spreading factor of the uplink signal and the maximum change rate of the Doppler frequency by arranging the pilot signal between symbols of a payload of the uplink in middle of the payload before an accumulated value of change rate of the Doppler frequency exceeds a predetermined value, wherein an increase of the spreading factor causes arranging a larger number of pilot signals in the middle of the payload; and
transmitting the uplink signal in which the pilot signal is arranged to the base station.

2. The apparatus of claim 1, wherein, when performing the step of arranging the pilot signal between the symbols of the payload of the uplink signal, the processor (210) performs a step of periodically arranging the pilot signal between the symbols of the payload.

3. The apparatus of claim 2, wherein, when performing the step of periodically arranging the pilot signal between the symbols of the payload, the processor (210) performs a step of inserting information indicating that the pilot signal is present in the payload and information on a period of the pilot signal into a header of the uplink signal.

4. The apparatus of claim 1, wherein, when performing the step of arranging the pilot signal in the uplink signal based on the spreading factor of the uplink signal and the maximum change rate of the Doppler frequency, the processor (210) performs the steps of: determining a frequency bandwidth of a chip based on a bandwidth of the uplink signal and the spreading factor; and determining the number of the pilot signals based on the maximum change rate of the Doppler frequency and the frequency bandwidth of the chip.

5. The apparatus of claim 1, wherein, when performing the step of arranging the pilot signal in the uplink signal based on the spreading factor of the uplink signal and the maximum change rate of the Doppler frequency, the processor (210) performs the steps of: determining a frequency bandwidth of a chip based on a bandwidth of the uplink signal and the spreading factor; and determining a period of the pilot signal based on the maximum change rate of the Doppler frequency and the frequency bandwidth of the chip.

6. The apparatus of claim 1, wherein, prior to the step of calculating the maximum change rate of the Doppler frequency, the processor (210) further performs a step of determining a window of time in which the change rate of the Doppler frequency is maximum in consideration of a movement time and a movement speed of the base station.

7. The apparatus of claim 6, wherein the processor (210) executes the program to perform the step of calculating the maximum change rate of the Doppler frequency when the window of time time in which the change rate of the Doppler frequency is maximum is included in a time period during which a terminal is exposed to the base station to transmit the uplink signal.

8. A method of transmitting an uplink signal to a base station, the method comprising:
calculating a maximum change rate of a Doppler frequency;
arranging a pilot signal in the uplink signal based on a spreading factor of the uplink signal and the maximum change rate of the Doppler frequency by arranging the pilot signal between symbols of a payload of the uplink in middle of the payload before an accumulated value of change rate of the Doppler frequency exceeds a predetermined value, wherein an increase of the spreading factor causes arranging a larger number of pilot signals in the middle of the payload; and
transmitting the uplink signal in which the pilot signal is arranged to the base station.

9. The method of claim 8, wherein the arranging of the pilot signal between the symbols of the payload of the uplink signal includes periodically arranging the pilot signal between the symbols of the payload.

10. The method of claim 9, wherein the periodically arranging of the pilot signal between the symbols of the payload includes inserting information indicating that the pilot signal is present in the payload and information on a period of the pilot signal into a header of the uplink signal.

11. The method of claim 8, wherein the arranging of the pilot signal in the uplink signal based on the spreading factor of the uplink signal and the maximum change rate of the Doppler frequency includes:
determining a frequency bandwidth of a chip based on a bandwidth of the uplink signal and the spreading factor; and
determining the number of the pilot signals based on the maximum change rate of the Doppler frequency and the frequency bandwidth of the chip.

12. The method of claim 8, wherein the arranging of the pilot signal in the uplink signal based on the spreading factor of the uplink signal and the maximum change rate of the Doppler frequency includes:
determining a frequency bandwidth of a chip based on a bandwidth of the uplink signal and the spreading factor; and
determining a period of the pilot signal based on the maximum change rate of the Doppler frequency and the frequency bandwidth of the chip.

## Patentansprüche

1. Vorrichtung zum Übertragen eines Uplink-Signals an eine Basisstation, wobei die Vorrichtung aufweist:
einen Prozessor (210); einen Speicher (230); und eine Kommunikationseinheit (220),
wobei der Prozessor (210) ein Programm ausführt, das in dem Speicher (230) gespeichert ist, um die folgenden Schritte auszuführen:
ein Berechnen einer maximalen Änderungsrate einer Dopplerfrequenz;
ein Anordnen eines Pilotsignals in dem Uplink-Signal basierend auf einem Spreizfaktor des Uplink-Signals und der maximalen Änderungsrate der Dopplerfrequenz durch ein Anordnen des Pilotsignals zwischen Symbolen einer Payload des Uplinks in der Mitte der Payload, bevor ein akkumulierter Wert der Änderungsrate der Dopplerfrequenz einen vorbestimmten Wert überschreitet, wobei eine Erhöhen des Spreizfaktors ein Anordnen einer größeren Anzahl von Pilotsignalen in der Mitte der Payload bewirkt; und
ein Übertragen des Uplink-Signals, in dem das Pilotsignal angeordnet ist, an die Basisstation.

2. Vorrichtung nach Anspruch 1, wobei beim Ausführen des Schritts des Anordnens des Pilotsignals zwischen den Symbolen der Payload des Uplink-Signals der Prozessor (210) einen Schritt eines periodischen Anordnens des Pilotsignals zwischen den Symbolen der Payload ausführt.

3. Vorrichtung nach Anspruch 2, wobei beim Ausführen des Schritts des periodischen Anordnens des Pilotsignals zwischen den Symbolen der Payload der Prozessor (210) einen Schritt eines Einfügens von Information, die angibt, dass das Pilotsignal in der Payload vorhanden ist, und von Information über eine Periode des Pilotsignals in einen Header des Uplink-Signals ausführt.

4. Vorrichtung nach Anspruch 1, wobei beim Ausführen des Schritts des Anordnens des Pilotsignals in dem Uplink-Signal basierend auf dem Spreizfaktor des Uplink-Signals und der maximalen Änderungsrate der Dopplerfrequenz der Prozessor (210) die folgenden Schritte ausführt:
ein Bestimmen einer Frequenzbandbreite eines Chips basierend auf einer Bandbreite des Uplink-Signals und dem Spreizfaktor; und
ein Bestimmen der Anzahl der Pilotsignale basierend auf der maximalen Änderungsrate der Dopplerfrequenz und der Frequenzbandbreite des Chips.

5. Vorrichtung nach Anspruch 1, wobei beim Ausführen des Schritts des Anordnens des Pilotsignals in dem Uplink-Signal basierend auf dem Spreizfaktor des Uplink-Signals und der maximalen Änderungsrate der Dopplerfrequenz der Prozessor (210) die folgenden Schritte ausführt:
ein Bestimmen einer Frequenzbandbreite eines Chips basierend auf einer Bandbreite des Uplink-Signals und dem Spreizfaktor; und
ein Bestimmen einer Periode des Pilotsignals basierend auf der maximalen Änderungsrate der Dopplerfrequenz und der Frequenzbandbreite des Chips.

6. Vorrichtung nach Anspruch 1, wobei vor dem Schritt des Berechnens der maximalen Änderungsrate der Dopplerfrequenz der Prozessor (210) ferner einen Schritt eines Bestimmens eines Zeitfensters, in dem die Änderungsrate der Dopplerfrequenz maximal ist, unter Berücksichtigung einer Bewegungszeit und einer Bewegungsgeschwindigkeit der Basisstation ausführt.

7. Vorrichtung nach Anspruch 6, wobei der Prozessor (210) das Programm ausführt, um den Schritt des Berechnens der maximalen Änderungsrate der Dopplerfrequenz auszuführen, wenn das Zeitfenster, in dem die Änderungsrate der Dopplerfrequenz maximal ist, in einer Zeitspanne enthalten ist, während der ein Endgerät der Basisstation ausgesetzt ist, um das Uplink-Signal zu übertragen.

8. Verfahren zum Übertragen eines Uplink-Signals an eine Basisstation, wobei das Verfahren aufweist:
ein Berechnen einer maximalen Änderungsrate einer Dopplerfrequenz;
ein Anordnen eines Pilotsignals in dem Uplink-Signal basierend auf einem Spreizfaktor des Uplink-Signals und der maximalen Änderungsrate der Dopplerfrequenz durch Anordnen des Pilotsignals zwischen Symbolen einer Payload des Uplinks in der Mitte der Payload, bevor ein akkumulierter Wert der Änderungsrate der Dopplerfrequenz einen vorbestimmten Wert überschreitet, wobei ein Erhöhen des Spreizfaktors ein Anordnen einer größeren Anzahl von Pilotsignalen in der Mitte der Payload bewirkt; und
ein Übertragen des Uplink-Signals, in dem das Pilotsignal angeordnet ist, an die Basisstation.

9. Verfahren nach Anspruch 8, wobei das Anordnen des Pilotsignals zwischen den Symbolen der Payload des Uplink-Signals ein periodische Anordnen des Pilotsignals zwischen den Symbolen der Payload aufweist.

10. Verfahren nach Anspruch 9, wobei das periodische Anordnen des Pilotsignals zwischen den Symbolen der Payload ein Einfügen von Information, die angibt, dass das Pilotsignal in der Payload vorhanden ist, und von Information über eine Periode des Pilotsignals in einen Header des Uplink-Signals aufweist.

11. Verfahren nach Anspruch 8, wobei das Anordnen des Pilotsignals in dem Uplink-Signal basierend auf dem Spreizfaktor des Uplink-Signals und der maximalen Änderungsrate der Dopplerfrequenz aufweist:
ein Bestimmen einer Frequenzbandbreite eines Chips basierend auf einer Bandbreite des Uplink-Signals und dem Spreizfaktor; und
ein Bestimmen der Anzahl der Pilotsignale basierend auf der maximalen Änderungsrate der Dopplerfrequenz und der Frequenzbandbreite des Chips.

12. Verfahren nach Anspruch 8, wobei das Anordnen des Pilotsignals in dem Uplink-Signal basierend auf dem Spreizfaktor des Uplink-Signals und der maximalen Änderungsrate der Dopplerfrequenz aufweist:
ein Bestimmen einer Frequenzbandbreite eines Chips basierend auf einer Bandbreite des Uplink-Signals und dem Spreizfaktor; und
ein Bestimmen einer Periode des Pilotsignals basierend auf der maximalen Änderungsrate der Dopplerfrequenz und der Frequenzbandbreite des Chips.

## Revendications

1. Appareil pour transmettre un signal de liaison montante à une station de base, l'appareil comprenant :
un processeur (210) ; une mémoire (230) ; et une unité de communication (220),
où le processeur (210) exécute un programme stocké dans la mémoire (230) pour réaliser les étapes consistant à :
calculer un taux de changement maximal d'une fréquence Doppler ;
agencer un signal pilote dans le signal de liaison montante sur la base d'un facteur d'étalement du signal de liaison montante et du taux de variation maximal de la fréquence Doppler en agençant le signal pilote entre des symboles d'une charge utile de la liaison montante au milieu de la charge utile avant qu'une valeur cumulée du taux de variation de la fréquence Doppler ne dépasse une valeur prédéterminée, où une augmentation du facteur d'étalement entraîne l'agencement d'un plus grand nombre de signaux pilotes au milieu de la charge utile ; et
transmettre le signal de liaison montante dans lequel le signal pilote est agencé à la station de base.

2. Appareil de la revendication 1, où, lors de la réalisation de l'étape consistant à agencer le signal pilote entre les symboles de la charge utile du signal de liaison montante, le processeur (210) réalise une étape consistant à agencer périodiquement le signal pilote entre les symboles de la charge utile.

3. Appareil de la revendication 2, où, lors de la réalisation de l'étape consistant à agencer périodiquement le signal pilote entre les symboles de la charge utile, le processeur (210) réalise une étape consistant à insérer des informations indiquant que le signal pilote est présent dans la charge utile et des informations sur une période du signal pilote dans un en-tête du signal de liaison montante.

4. Appareil de la revendication 1, où, lors de la réalisation de l'étape consistant à agencer le signal pilote dans le signal de liaison montante sur la base du facteur d'étalement du signal de liaison montante et du taux de variation maximal de la fréquence Doppler, le processeur (210) réalise les étapes consistant à : déterminer une largeur de bande de fréquence d'une puce sur la base d'une largeur de bande du signal de liaison montante et du facteur d'étalement ; et déterminer le nombre de signaux pilotes sur la base du taux de variation maximal de la fréquence Doppler et de la largeur de bande de fréquence de la puce.

5. Appareil de la revendication 1, où, lors de la réalisation de l'étape consistant à agencer le signal pilote dans le signal de liaison montante sur la base du facteur d'étalement du signal de liaison montante et du taux de variation maximal de la fréquence Doppler, le processeur (210) réalise les étapes consistant à : déterminer une largeur de bande de fréquence d'une puce sur la base d'une largeur de bande du signal de liaison montante et du facteur d'étalement ; et déterminer une période du signal pilote sur la base du taux de variation maximal de la fréquence Doppler et de la largeur de bande de fréquence de la puce.

6. Appareil de la revendication 1, où, avant l'étape consistant à calculer le taux de variation maximal de la fréquence Doppler, le processeur (210) réalise en outre une étape consistant à déterminer une fenêtre de temps dans laquelle le taux de variation de la fréquence Doppler est maximal en tenant compte d'un temps de déplacement et d'une vitesse de déplacement de la station de base.

7. Appareil de la revendication 6, où le processeur (210) exécute le programme pour réaliser l'étape consistant à calculer le taux de variation maximal de la fréquence Doppler lorsque la fenêtre de temps dans laquelle le taux de variation de la fréquence Doppler est maximal est incluse dans une période de temps pendant laquelle un terminal est exposé à la station de base pour transmettre le signal montant.

8. Procédé de transmission d'un signal de liaison montante à une station de base, le procédé comprenant :
le calcul d'un taux de variation maximal d'une fréquence Doppler ;
l'agencement d'un signal pilote dans le signal de liaison montante sur la base d'un facteur d'étalement du signal de liaison montante et du taux de variation maximal de la fréquence Doppler en agençant le signal pilote entre des symboles d'une charge utile de la liaison montante au milieu de la charge utile avant qu'une valeur cumulée du taux de variation de la fréquence Doppler ne dépasse une valeur prédéterminée, où une augmentation du facteur d'étalement entraîne l'agencement d'un plus grand nombre de signaux pilotes au milieu de la charge utile ; et
la transmission du signal de liaison montante dans lequel le signal pilote est agencé à la station de base.

9. Procédé de la revendication 8, où l'agencement du signal pilote entre les symboles de la charge utile du signal de liaison montante inclut l'agencement périodique du signal pilote entre les symboles de la charge utile.

10. Procédé de la revendication 9, où l'agencement périodique du signal pilote entre les symboles de la charge utile inclut l'insertion d'informations indiquant que le signal pilote est présent dans la charge utile et d'informations sur une période du signal pilote dans un en-tête du signal de liaison montante.

11. Procédé de la revendication 8, où l'agencement du signal pilote dans le signal de liaison montante sur la base du facteur d'étalement du signal de liaison montante et du taux de variation maximal de la fréquence Doppler inclut :
la détermination d'une largeur de bande de fréquence d'une puce sur la base d'une largeur de bande du signal de liaison montante et du facteur d'étalement ; et
la détermination du nombre de signaux pilotes sur la base du taux de variation maximal de la fréquence Doppler et de la largeur de bande de fréquence de la puce.

12. Procédé de la revendication 8, où l'agencement du signal pilote dans le signal de liaison montante sur la base du facteur d'étalement du signal de liaison montante et du taux de variation maximal de la fréquence Doppler inclut :
la détermination d'une largeur de bande de fréquence d'une puce sur la base d'une largeur de bande du signal de liaison montante et du facteur d'étalement ; et
la détermination d'une période du signal pilote sur la base du taux de variation maximal de la fréquence Doppler et de la largeur de bande de fréquence de la puce.
